# EUROPÄISCHE PATENTSCHRIFT

(11) **EP 0 770 807 B1**
(45) Veröffentlichungstag und Bekanntmachung des Hinweises auf die Patenterteilung: **10.01.2001**
(21) Anmeldenummer: 96115623.9
(22) Anmeldetag: 28.09.1996
(51) Int. Cl.: F16L 17/04, F16L 21/08

(54) **Rohrschelle**
Pipe clamp
Collier de serrage

(30) Priorität: 26.10.1995 DE 19539824
(43) Veröffentlichungstag der Anmeldung: 02.05.1997
(73) Patentinhaber: Rasmussen GmbH, D-63477 Maintal (DE)
(72) Erfinder: Hohmann, Ralf, 63486 Bruchköbel (DE)
(74) Vertreter: Knoblauch, Ulrich, Dr.-Ing.

(56) Entgegenhaltungen:
- EP-A- 0 205 896
- EP-A- 0 447 955
- DD-A- 120 260
- DE-A- 3 926 626
- DE-U- 9 310 712
- FR-A- 1 520 734
- GB-A- 2 186 651
- US-A- 1 571 343

## Beschreibung

Die Erfindung bezieht sich auf eine Rohrschelle zum axialen Verbinden der Enden zweier unprofilierter Rohre, mit einem in Umfangsrichtung ununterbrochen ausgebildeten Schellenmantel, der zwei sich in Umfangsrichtung erstreckende Schlitze aufweist, und einer Spanneinrichtung mit zwei axial am Schellenmantel gesicherten, unterbrochenen Spannringen, die an der Innenseite des Schellenmantels beiderseits einer elastomeren Dichtungseinrichtung angeordnet sind und jeweils einen Spannkopf mit jeweils zwei zusammenziehbaren Spannbakken aufweisen, wobei die Spannköpfe jeweils durch einen der Schlitze aus dem Schellenmantel herausragen und die Dichtungseinrichtung vom Schellenmantel umgeben und auf ihrer Innenseite mit Dichtlippen versehen ist, deren Innendurchmesser im ungespannten Zustand der Dichtungsmanschette kleiner als der Außendurchmesser der Rohre ist.

Bei einer bekannten Rohrschelle (DE 39 26 626 A1) ist der Schellenmantel als endliches Metallband ausgebildet, das von zwei Spannringen umgeben ist. Seine Umfangsrandabschnitte sind radial nach innen gedrückt und nehmen Sicherungsbänder mit radialen Krallen auf ihrer Innenseite in Nuten auf. Im montierten Zustand der Rohrschelle greifen die Krallen in die Außenflächen der Rohre ein, um ein axiales Auseinanderziehen der Rohre durch den Druck des durch sie hindurchfließenden Fluids zu verhindern. Die Spannringe sind als Bänder ausgebildet, die um die Umfangsrandabschnitte des Schellenmantels herumgelegt und an diesem angeschweißt sind. An den Enden der bandförmigen Spannringe sind Spannbacken ausgebildet, durch die Spannschrauben hindurchgeführt sind. Beim Spannen der Spannschrauben müssen erhebliche Spannkräfte aufgebracht werden, um nicht nur die Spannringe, sondern auch den Schellenmantel, die Sicherungsbänder und die einteilige Dichtungsmanschette so zu verformen, daß die Krallen fest in das Rohrmaterial eingreifen und die Dichtungsmanschette dicht am Umfang der Rohre anliegt. Wenn die Rohre aus Metall bestehen, können insbesondere bei Rohren, die in feuchter Umgebung eingesetzt werden, Kontakt-Korrosionsprobleme zwischen den Rohren und der Rohrschelle auftreten, die nach längerer Zeit sogar zu einer Zerstörung der Rohre führen können.

Bei einer bekannten Rohrschelle der eingangs genannten Art nach dem Oberbegriff des Patentanspruchs 1 (DD-A-120 260) stützen sich die Spannringe bei Druckbelastung der Rohrverbindung gegen Drucknasen in die Spannringe aufnehmenden Ringnuten seitlich von Rohrführungen des Schellenmantels ab und verkanten, um einen Kraftschluß mit den Rohrenden zu erreichen, der gemeinsam mit den Rohrführungen die mechanische Festigkeit der Rohrverbindung gewährleisten soll. Dies setzt eine Ausbildung der Spannringe aus Metall voraus, das bei Metallrohren wiederum zu den genannten Kontakt-Korrosionsproblemen führt. Damit sich die Spannringe verkanten können, dürfen sie nicht zu fest gespannt werden, so daß kein hinreichend hoher Kraftschluß zwischen den Spannenden und den Rohrenden sichergestellt ist. Die Dichtungseinrichtung besteht aus zwei getrennten gummielastischen Dichtringen, die einen Durchtritt eines Druckfluids zwischen sich und dann über ihre radial äußere Seite trotz einer labyrinthartigen aufwendigen Formgebung der Dichtflächen nur mangelhaft verhindern, da der Schellenmantel nicht radial gespannt wird.

Aus DE-U-93 10 712 ist eine Rohrkupplung bekannt, bei der im Schellenmantel über jedem Rohrende sich in Umfangsrichtung erstreckende Laschen freigeschnitten sind, deren freie Enden radial nach außen gebogen und durch eine Spannschraube zusammenziehbar sind. Auf der Innenseite der Laschen und des Schellenmantels ist ein scharfkantig profilierter Klemmring aus Metall angeordnet, der in Grenzfällen auch aus Kunststoff bestehen kann. Dieser Klemmring soll allein dem Zweck dienen, eine möglichst gleichmäßige Pressung des jeweiligen Rohrendes zu erreichen. Letzteres wird jedoch bei der Ausbildung von Laschen im Schellenmantel nicht erreicht, da zum einen die Spannkraft der Laschen zum Teil unverändert unmittelbar und zum anderen über den Schellenmantel unter Verformung des Schellenmantels auf den Klemmring übertragen wird. Die Verformung des Schellenmantels beim Spannen bedingt wiederum die Ausübung einer hohen Spannkraft. Ferner sind auch bei dieser Rohrschelle zwei getrennte Dichtringe, jeweils einer für jedes Rohrende, vorgesehen.

Eine einteilige Dichtungsmanschette ist auch aus der GB-A-2 186 651 bekannt.

Aus der FR 1 520 734 sind ebenfalls Rohrschellen mit getrennten Dichtringen oder Dichtlippen und mit Spannringen aus Metall bekannt. Bei den Spannringen besteht mithin weiterhin die Gefahr einer Kontakt-Korrosion zwischen ihnen und den Rohren.

Der Erfindung liegt die Aufgabe zugrunde, eine Rohrschelle der eingangs genannten Art anzugeben, bei der man weiterhin mit geringeren Spannkräften als bei einer über den Schellenmantel spannbaren Rohrschelle auskommt und die Gefahr einer Kontakt-Korrosion zwischen der Rohrschelle und den Rohren bei hinreichend axialer Belastbarkeit und Dichtigkeit der Rohrverbindung weitgehend vermieden ist.

Diese Aufgabe wird erfindungsgemäß dadurch gelöst, daß die Spannringe auf ihrer Innenseite jeweils mit einem nichtmetallischen Reibbelag versehen sind, daß die Spannbacken jedes Spannkopfes formschlüssig zusammensteckbar sind und daß die Dichtungseinrichtung eine einteilige Dichtungsmanschette ist.

Bei dieser Ausbildung brauchen weiterhin nur die Spannringe, aber nicht der Schellenmantel und die Dichtungsmanschette gespannt zu werden. Dementsprechend kommt man weiterhin mit geringerer Spannkraft aus. Der Reibbelag stellt nicht nur eine hohe axiale Belastbarkeit der Rohrverbindung sicher, sondern verhindert auch eine Kontakt-Korrosion zwischen den Spannringen und den Rohren. Darüber hinaus können auch die Spannbacken jedes spannkopfes äußere axiale Kräfte aufnehmen, ohne sich axial oder radial zueinander zu verschieben. Die einteilige Dichtungsmanschette verhindert einen Durchtritt eines Druckfluids zwischen den Rohrenden und über die radial äußere Seite der Dichtungsmanschette. Außerdem radial äußere Seite der Dichtungsmanschette. Außerdem trägt sie in gewissem Maße auch zur axialen Belastbarkeit der Rohrverbindung bei.

Vorzugsweise weist der Schellenmantel Kunststoff auf. Dadurch wird auch eine Kontakt-Korrosion zwischen Schellenmantel und den Rohren, wenn diese den Schellenmantel berühren, vermieden.

Die Reibbeläge können an den Innenseiten der Spannringe auf verschiedenste Weise befestigt sein. Vorzugsweise sind sie in Nuten der Spannringe angeordnet. In diesen Nuten können sie zusätzlich stoffschlüssig, zum Beispiel durch Kleben, befestigt sein, um sie nicht nur formschlüssig zu sichern.

Auch die Spannringe können Kunststoff aufweisen, vorzugsweise faserverstärkten, insbesondere glasfaserverstärkten, Kunststoff, so daß sie hohe Spannkräfte aufnehmen können und selbst keine Kontakt-Korrosion verursachen.

Insbesondere können die Spannringe an axial äußeren Seitenwänden des Schellenmantels anliegen, um sie axial im Schellenmantel zu sichern.

Im einzelnen kann dafür gesorgt sein, daß jede Spannbacke zwei sich in Umfangsrichtung erstreckende Vorsprünge aufweist, die axial und radial zueinander versetzt sind, wobei bei den Spannbacken jedes Spannkopfes die axialen Versetzungen entgegengesetzt zueinander und die radialen Versetzungen entgegengesetzt zueinander sind.

Sodann können die Stirnseiten der Vorsprünge der einen Spannbacke jedes Spannkopfes entgegengesetzt zueinander abgeschrägt und die Stirnseiten der Vorsprünge der anderen Spannbacke jedes Spannkopfes entgegengesetzt zueinander und unter zu den Abschrägungswinkeln der gegenüberliegenden Stirnseiten der Vorsprünge der einen Spannbacke komplementären Winkeln abgeschrägt sein. Bei dieser Ausbildung werden die Spannbacken beim Spannen zwangsläufig in eine zueinander ausgerichtete Lage geführt.

Die Erfindung und ihre Weiterbildungen werden nachstehend anhand der Zeichnung eines bevorzugten Ausführungsbeispiels in Verbindung mit der Zeichnung näher beschrieben. Es zeigen:

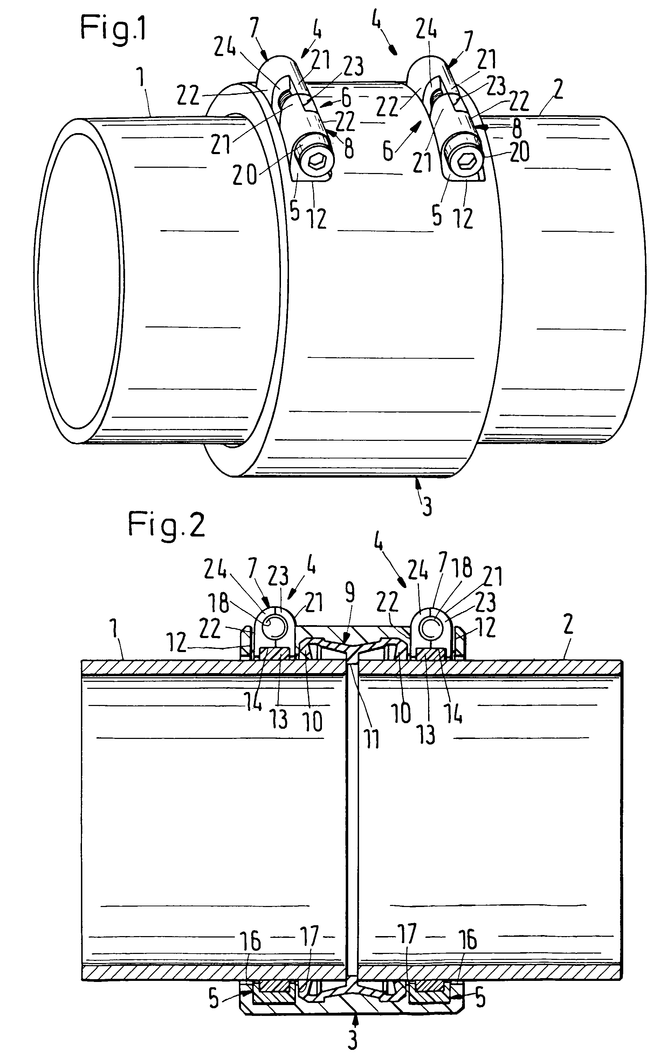

- Fig. 1: eine perspektivische Darstellung einer erfindungsgemäßen Rohrschelle, die um Endabschnitte zweier Rohre herumgelegt ist,
- Fig. 2: einen Axialschnitt der Anordnung nach Fig. 1,

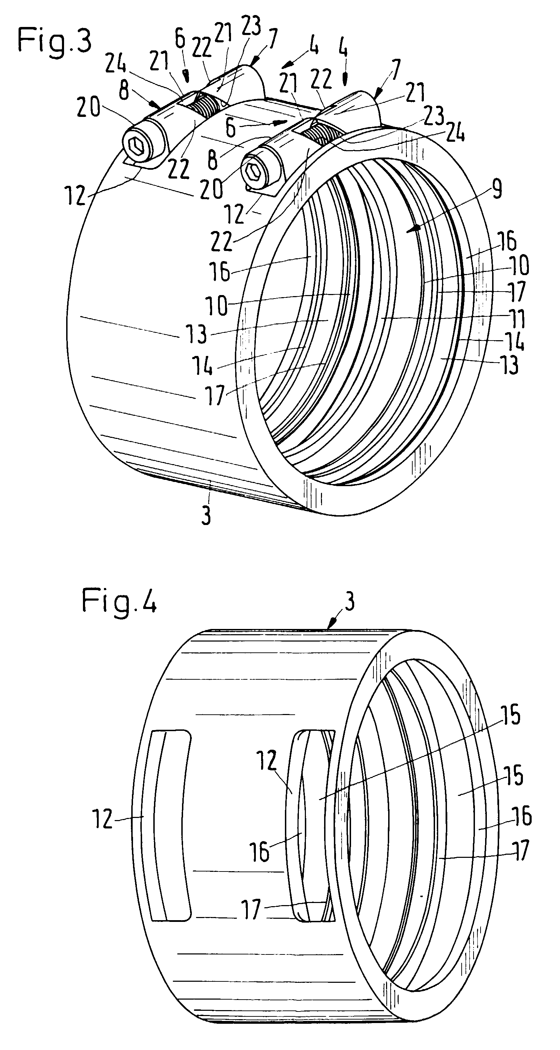

- Fig. 3: eine perspektivische Darstellung der erfindungsgemäßen Rohrschelle nach den Fig. 1 und 2 ohne die Rohre,
- Fig. 4: eine perspektivische Darstellung allein des Schellenmantels der erfindungsgemäßen Rohrschelle nach den Fig. 1 bis 3,

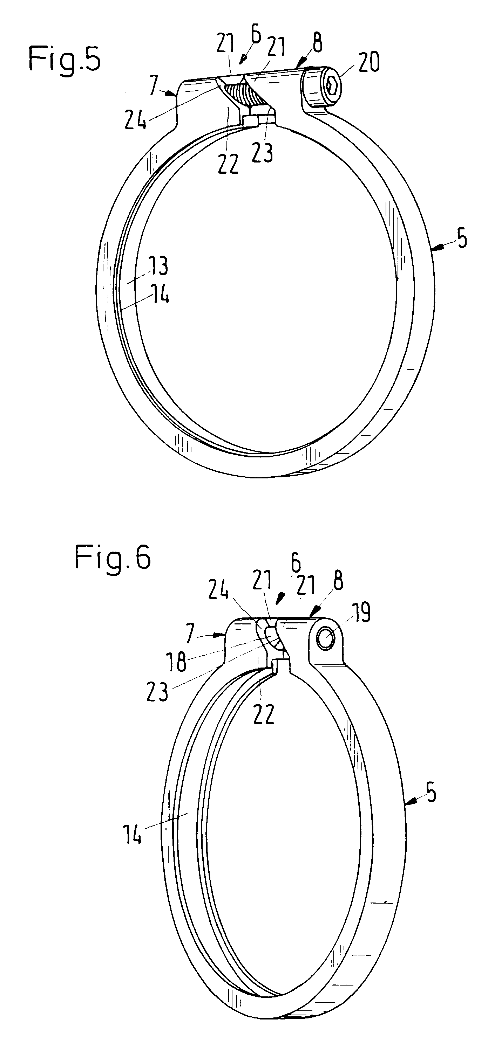

- Fig. 5: eine perspektivische Darstellung eines Spannrings der Rohrschelle nach den Fig. 1 bis 3, einschließlich Spannschraube und Reibbelag, und
- Fig. 6: eine perspektivische Darstellung allein des Spannrings ohne Spannschraube und Reibbelag.

Die dargestellte Rohrschelle dient zum axialen Verbinden der Enden zweier unprofilierter Rohre 1 und 2, insbesondere Metallrohre. Sie hat einen in Umfangsrichtung ununterbrochenen Schellenmantel 3 aus Kunststoff, vorzugsweise aus glasfaserverstärktem Polypropylen. Außerdem hat die Rohrschelle eine Spanneinrichtung 4 mit zwei an der Innenseite des Schellenmantels 3 beiderseits der Dichtungsmanschette 9 axial gesicherten, unterbrochenen Spannringen 5, die jeweils einen Spannkopf 6 mit jeweils zwei zusammenziehbaren Spannbacken 7 und 8 aufweisen. Der Schellenmantel 3 umgibt eine elastomere Dichtungsmanschette 9 mit Dichtlippen 10 und einer in ihrer axialen Mitte umlaufenden Rippe 11 zur Einschubbegrenzung der Rohre 1 und 2. Der Innendurchmesser der Dichtlippen 10 ist in ungespanntem Zustand der Dichtungsmanschette 9 kleiner als der Außendurchmesser der Rohre 1 und 2. Der Schellenmantel 3 hat ferner zwei sich in Umfangsrichtung erstreckende Schlitze 12, durch die jeweils einer der Spannköpfe 6 aus dem Schellenmantel 3 herausragt.

Die Spannringe 5 sind auf ihrer Innenseite jeweils mit einem nichtmetallischen Reibbelag 13 versehen, wobei die Reibbeläge 13 in Nuten 14 der Spannringe 5 angeordnet sind. Vorzugsweise sind die Reibbeläge 13 in den Nuten 14 stoffschlüssig mit den Spannringen 5 verbunden, zum Beispiel durch Kleben oder Einspritzen. Das Material der Reibbeläge enthält im wesentlichen ein thermoplastisches Elastomer (TPE). Die Spannringe 5 bestehen aus einem Polyamid, das vorzugsweise durch Glasfasern verstärkt ist. Ferner sind die Spannringe 5 ihrerseits in umlaufenden Nuten 15 auf der Innenseite des Schellenmantels lose angeordnet. Die Nuten 15 sind durch Seitenwände 16 und 17 begrenzt, so daß die Spannringe 5 bei axialer Zugbelastung der Rohre 1 und 2 an den axial äußeren Seitenwänden 16 anliegen.

Die Spannbacken 7 haben eine Gewindebohrung 18, und die Spannbacken 8 eine gewindefreie Durchgangsbohrung 19. Durch die Durchgangsbohrungen 19 ist jeweils eine Spannschraube 20 mit ihrem Gewindeschaft hindurchgeführt, so daß die Gewindeschäfte in jeweils eine der Gewindebohrungen 18 eingreifen.

Ferner sind die Spannbacken 7, 8 jedes Spannkopfes 6 formschlüssig zusammensteckbar. Zu diesem Zweck hat jede Spannbacke 7, 8 zwei sich in Umfangsrichtung erstreckende Vorsprünge 21, 22, die axial und radial zueinander versetzt sind. Dabei sind bei den Spannbacken 7, 8 jedes Spannkopfes 6 die axialen Versetzungen entgegengesetzt zueinander und die radialen Versetzungen ebenfalls entgegengesetzt zueinander. Die Stirnseiten 23, 24 der Vorsprünge 21, 22 der einen Spannbacke 7 jedes Spannkopfes 6 sind entgegengesetzt zueinander abgeschrägt und die Stirnseiten 23, 24 der Vorsprünge 21, 22 der anderen Spannbacke 8 entgegengesetzt zueinander und unter zu den Abschrägungswinkeln der gegenüberliegenden Stirnseiten 23, 24 der Vorsprünge 21, 22 der einen Spannbacke 7 komplementären Winkeln abgeschrägt.

Um die Rohre 1 und 2 miteinander zu verbinden, werden sie im ungespannten Zustand der Spannschrauben 20 in die Rohrschelle axial eingeführt, bis ihre Enden an der Rippe 11 anliegen. Gleichzeitig legen sich die Dichtlippen 10 dicht an der Außenfläche der Rohre 1 und 2 an. Danach werden die Spannschrauben 20 festgezogen, so daß die Spannringe 5 die Reibbeläge 13 fest gegen die Außenfläche der Rohre 1 und 2 drücken.

Beim Spannen der Spannringe 5 braucht daher lediglich die verhältnismäßig geringe Biegesteifigkeit der Spannringe 5 und der Reibbeläge 13 überwunden zu werden und nicht zusätzlich die des Schellenmantels 3 und der Dichtlippen 10. Dennoch erhält man für viele Anwendungszwecke, bei denen keine sehr hohe axiale Zugbelastung der Rohre auftritt, zum Beispiel bei Kanalisationsrohren, eine hinreichend hohe Axialbelastbarkeit der Rohrverbindung. Desgleichen werden Kontakt-Korrosionsprobleme zwischen der Rohrschelle und den Rohren vermieden, wenn es sich um Metallrohre handelt. Ferner ist die Herstellung der Rohrschelle und der Zusammenbau ihrer Einzelteile einfacher als bei einer Rohrschelle aus Metall.

## Patentansprüche

1. Rohrschelle zum axialen Verbinden der Enden zweier unprofilierter Rohre (1, 2), mit einem in Umfangsrichtung ununterbrochen ausgebildeten Schellenmantel (3), der zwei sich in Umfangsrichtung erstrekkende Schlitze (12) aufweist, und einer Spanneinrichtung (4) mit zwei axial am Schellenmantel (3) gesicherten, unterbrochenen Spannringen (5), die an der Innenseite des Schellenmantels (3) beiderseits einer elastomeren Dichtungseinrichtung (9) angeordnet sind und jeweils einen Spannkopf (6) mit jeweils zwei zusammenziehbaren Spannbacken (7, 8) aufweisen, wobei die Spannköpfe (6) jeweils durch einen der Schlitze (12) aus dem Schellenmantel (3) herausragen und die Dichtungseinrichtung (9) vom Schellenmantel (3) umgeben und auf ihrer Innenseite mit Dichtlippen (10) versehen ist, deren Innendurchmesser im ungespannten Zustand der Dichtungsmanschette (9) kleiner als der Außendurchmesser der Rohre (1, 2) ist, **dadurch gekennzeichnet,** daß die Spannringe (5) auf ihrer Innenseite jeweils mit einem nichtmetallischen Reibbelag (13) versehen sind, daß die Spannbacken (7, 8) jedes Spannkopfes (6) formschlüssig zusammensteckbar sind und daß die Dichtungseinrichtung (9) eine einteilige Dichtungsmanschette ist.

2. Rohrschelle nach Anspruch 1, **dadurch gekennzeichnet,** daß der Schellenmantel (3) Kunststoff aufweist.

3. Rohrschelle nach Anspruch 1 oder 2, **dadurch gekennzeichnet,** daß die Reibbeläge (13) in Nuten (14) der Spannringe (5) angeordnet sind.

4. Rohrschelle nach einem der Ansprüche 1 bis 3, **dadurch gekennzeichnet,** daß die Spannringe (5) Kunststoff aufweisen.

5. Rohrschelle nach einem der Ansprüche 1 bis 4, **dadurch gekennzeichnet,** daß die Spannringe (5) an axial äußeren Seitenwänden (16) des Schellenmantels (3) anliegen.

6. Rohrschelle nach einem der Ansprüche 1 bis 5, dadurch gekennzeichnet, daß jede Spannbacke (7, 8) zwei sich in Umfangsrichtung erstreckende Vorsprünge (21, 22) aufweist, die axial und radial zueinander versetzt sind, wobei bei den Spannbacken (7, 8) jedes Spannkopfes (6) die axialen Versetzungen entgegengesetzt zueinander und die radialen Versetzungen entgegengesetzt zueinander sind.

7. Rohrschelle nach Anspruch 6, **dadurch gekennzeichnet,** daß die Stirnseiten (23, 24) der Vorsprünge (21, 22) der einen Spannbacke (7) jedes Spannkopfes (6) entgegengesetzt zueinander abgeschrägt und die Stirnseiten (23, 24) der Vorsprünge (21, 22) der anderen Spannbacke (8) jedes Spannkopfes (6) entgegengesetzt zueinander und unter zu den Abschrägungswinkeln der gegenüberliegenden Stirnseiten (23, 24) der Vorsprünge (21, 22) der einen Spannbacke (7) komplementären Winkeln abgeschrägt sind.

## Claims

1. A pipe clip for axially connecting the ends of two unprofiled pipes (1, 2), comprising a clip sleeve (3) which is uninterrupted in the peripheral direction and which has two slots (12) extending in the peripheral direction, and a clamping device (4) comprising two interrupted clamping rings (5) which are axially secured to the clip sleeve (3) and which are arranged at the inside of the clip sleeve (3) at both sides of an elastomer sealing device (9) and which each have a respective clamping head (6) each having two clamping jaws (7, 8) which can be pulled together, wherein the clamping heads (6) each project out of the clip sleeve (3) through a respective one of the slots (12) and the sealing device (9) is surrounded by the clip sleeve (3) and is provided on its inside with sealing lips (10) whose inside diameter in the non-tightened condition of the sealing sleeve (9) is smaller than the outside diameter of the pipes (1, 2), characterised in that on their inside the clamping rings (5) are each provided with a respective non-metallic friction lining (13), that the clamping jaws (7, 8) of each clamping head (6) can be fitted together in positively locking relationship, and that the sealing device (9) is a one-piece sealing sleeve.

2. A pipe clip according to claim 1 characterised in that the clip sleeve (3) has plastics material.

3. A pipe clip according to claim 1 or claim 2 characterised in that the friction linings (13) are disposed in grooves (14) in the clamping rings (5).

4. A pipe clip according to one of claims 1 to 3 characterised in that the clamping rings (5) have plastics material.

5. A pipe clip according to one of claims 1 to 4 characterised in that the clamping rings (5) bear against axially outward side walls (16) of the clip sleeve (3).

6. A pipe clip according to one of claims 1 to 5 characterised in that each clamping jaw (7, 8) has two projections (21, 22) which extend in the peripheral direction and which are axially and radially displaced relative to each other, wherein in the clamping jaws (7, 8) of each clamping head (6) the axial displacements are in opposite relationship to each other and the radial displacements are in opposite relationship to each other.

7. A pipe clip according to claim 6 characterised in that the end faces (23, 24) of the projections (21, 22) of the one clamping jaw (7) of each clamping head (6) are bevelled in mutually opposite relationship and the end faces (23, 24) of the projections (21, 22) of the other clamping jaw (8) of each clamping head (6) are bevelled in mutually opposite relationship and at angles which are complementary to the bevel angles of the oppositely disposed end faces (23, 24) of the projections (21, 22) of the one clamping jaw (7).

## Revendications

1. Collier de serrage pour la connexion axiale des extrémités de deux tuyaux non profilés (1, 2), comprenant une enveloppe de collier (3) de conformation ininterrompue dans le sens périphérique, qui présente deux fentes (12) s'étendant dans le sens périphérique, et un dispositif de serrage (4) avec deux bagues de serrage (5) interrompues, fixées sur l'enveloppe de collier (3), qui sont disposées sur le côté intérieur de l'enveloppe de collier (3) des deux côtés d'un dispositif d'étanchéité (9) élastomère et présentent respectivement une tête de serrage (6) avec chaque fois deux mâchoires de serrage (7, 8) pouvant être serrées, les têtes de serrage (6) faisant respectivement saillie de l'enveloppe de collier (3) à travers une des fentes (12) et le dispositif d'étanchéité (9) étant entouré par l'enveloppe de collier (3) et pourvu sur son côté intérieur de lèvres d'étanchéité (10) dont le diamètre intérieur est plus petit dans la position desserrée de la garniture cylindrique (9) que le diamètre extérieur des tuyaux (1, 2), caractérisé en ce que les bagues de serrage (5) sont pourvues respectivement sur leur côté intérieur d'un revêtement de friction (13) non métallique, en ce que les mâchoires de serrage (7, 8) de chaque tête de serrage (6) sont intimement emboîtables et en ce que le dispositif d'étanchéité (9) est une garniture cylindrique d'une pièce.

2. Collier de serrage selon la revendication 1, caractérisé en ce que l'enveloppe de collier (3) est en matière synthétique.

3. Collier de serrage selon la revendication 1 ou 2, caractérisé en ce que les revêtements de friction (13) sont disposés dans des rainures (14) des bagues de serrage (5).

4. Collier de serrage selon une des revendications 1 à 3, caractérisé en ce que les bagues de serrage (5) sont en matière synthétique.

5. Collier de serrage selon une des revendications 1 à 4, caractérisé en ce que les bagues de serrage (5) sont en contact avec les parois latérales extérieures (16) de l'enveloppe de collier (3).

6. Collier de serrage selon une des revendications 1 à 5, caractérisé en ce que chaque mâchoire de serrage (7, 8) présente deux avancées (21, 22) s'étendant dans le sens périphérique qui sont décalées axialement et radialement l'une par rapport à l'autre, les décalages axiaux étant inversés l'un par rapport à l'autre et les décalages radiaux étant inversés l'un par rapport à l'autre pour les mâchoires de serrage (7, 8) de chaque tête de serrage (6).

7. Collier de serrage selon la revendication 6, caractérisé en ce que les côtés frontaux (23, 24) des avancées (21, 22) de l'une des mâchoires (7) de chaque tête de serrage (6) sont inclinés en sens inverse l'un par rapport à l'autre et les côtés frontaux (23, 24) des avancées (21, 22) de l'autre mâchoire (8) de chaque tête de serrage (6) sont inclinés en sens inverse l'un par rapport à l'autre et à des angles complémentaires aux angles d'inclinaison des côtés frontaux opposés (23, 24) des avancées (21, 22) de la première mâchoire (7).
